# EUROPEAN PATENT APPLICATION

(11) **EP 2 320 304 A2**
(43) Date of publication of application: **11.05.2011**
(21) Application number: 09798051.0
(22) Date of filing: 26.06.2009
(51) Int. Cl.: G06F 3/033

(54) **APPARATUS AND METHOD FOR MOTION RECOGNITION**

(30) Priority: 17.07.2008 KR 20080069693
(71) Applicant: Microinfinity, Inc., Gyeonggi-do 443-270 (KR)
(72) Inventor: CHUNG, Hak-Young, Seoul 135-100 (KR); PARK, Kyu-Cheol, Seoul 137-070 (KR); LEE, Jung-Hwan, Suwon-si Gyeonggi-do 443-470 (KR); PARK, Won-Jang, Seoul 139-200 (KR); SAKONG, Byung-Chun, Suwon-si Gyeonggi-do 443-470 (KR); KIM, Sang-Bum, Seoul 122-070 (KR); YANG, Woo-Hee, Suwon-si Gyeonggi-do 443-470 (KR)
(74) Representative: Strobel, Wolfgang
(86) International application number: PCT/KR2009/003489
(87) International publication number: WO 2010/008148

(57) **Abstract**

Provided are a motion recognition apparatus and method, and more particularly, a motion recognition apparatus and method which are employed to move a pointer only when intended by a user using a touch sensor included in a pointing device that moves the pointer according to a motion sensed by a motion sensor.

## Description

### [Technical Field]

The present invention relates to a motion recognition apparatus and method, and more particularly, to a motion recognition apparatus and method which are employed to move a pointer only when intended by a user using a touch sensor included in a pointing device that moves the pointer according to a motion sensed by a motion sensor.

### [Background Art]

In recent years, a technique for connecting a memory device storing, for example, pictures, music, and moving pictures to a television (TV) has been proposed to enable a user to view multimedia contents on a TV screen. In addition, an Internet protocol television (IPTV) has been developed to provide various Internet-based services and contents as well as the existing broadcasting channels to the user. Therefore, there is an increasing necessity for the use of a keyboard and a mouse, which are input units used for a personal computer (PC). For this reason, the use of an air mouse, which is a pointing device using a gyro, is expanding from living room PCs to TVs.

In some cases, a pointer may be moved against a user's intention. For example, when the user unintentionally applies a motion to a pointing device placed on the floor, the position of the pointer may be changed. Also, when the user puts down the pointing device on the floor after selecting a position on a screen using the pointing device and fixing the pointer at the selected position, the motion of putting down the pointing device on the floor may result in a change in the position of the pointer.

Therefore, an invention which applies a motion intended by the user, instead of all recognized motions, to the motion of the pointer is required.

### [Disclosure]

### [Technical Problem]

It is an objective of the present invention to move a pointer only when intended by a user using a touch sensor included in a pointing device that moves the pointer according to a motion sensed by a motion sensor.

However, the objectives of the present invention are not restricted to the one set forth herein. The above and other objectives of the present invention will become more apparent to one of ordinary skill in the art to which the present invention pertains by referencing the detailed description of the present invention given below.

### [Technical Solution]

According to an aspect of the present invention, there is provided a motion recognition apparatus including: a motion sensing unit sensing a motion applied to a body of the motion recognition apparatus; a touch sensing unit including one or more touch cells to sense a user's touch; a control unit determining whether the applied motion is effective based on the user's sensed touch; and a communication unit transmitting a signal for the applied motion based on whether the applied motion is effective.

According to another aspect of the present invention, there is provided a motion recognition apparatus including: a motion sensing unit sensing a motion applied to a body of the motion recognition apparatus; an input unit including one or more buttons to sense a user's input; a control unit determining whether the applied motion is effective based on a duration from the generation of the sensed input; and a communication unit transmitting a signal for the applied motion based on whether the applied motion is effective.

According to another aspect of the present invention, there is provided a motion recognition method including: sensing a motion applied to a body of a motion recognition apparatus; sensing a user's touch using one or more touch cells; determining whether the applied motion is effective based on the user's sensed touch; and transmitting a signal for the applied motion based on whether the applied motion is effective.

According to another aspect of the present invention, there is provided a motion recognition method including: sensing a motion applied to a body of a motion recognition apparatus; sensing a user's input using one or more buttons; determining whether the applied motion is effective based on a duration from the generation of the sensed input; and transmitting a signal for the applied motion based on whether the applied motion is effective.

### [Advantageous Effects]

In a motion recognition apparatus and method according to the present invention, a pointer is moved only when intended by a user using a touch sensor included in a pointing device that moves the pointer according to a motion sensed by a motion sensor. Therefore, the user can easily control the pointer on a screen.

However, the effects of the present invention are not restricted to the one set forth herein. The above and other effects of the present invention will become more apparent to one of daily skill in the art to which the present invention pertains by referencing the claims.

### [Description of Drawings]

The above and other aspects and features of the present invention will become more apparent by describing in detail exemplary embodiments thereof with reference to the attached drawings, in which:
FIG. 1 is a diagram illustrating a motion recognition system according to an exemplary embodiment of the present invention;
FIG. 2 is a block diagram of a motion recognition apparatus according to an exemplary embodiment of the present invention;
FIG. 3 is a diagram illustrating touch cells provided in the motion recognition apparatus of FIG. 2;
FIG. 4 is a diagram illustrating the structure of an input unit according to an exemplary embodiment of the present invention;
FIG. 5 is a block diagram of a pointer control apparatus according to an exemplary embodiment of the present invention;
FIG. 6 is a block diagram of a display apparatus according to an exemplary embodiment of the present invention; and
FIG. 7 is a flowchart illustrating a motion recognition process according to an exemplary embodiment of the present invention.

### [Best Mode]

Advantages and features of the present invention and methods of accomplishing the same may be understood more readily by reference to the following detailed description of exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

The term 'unit', as used herein, means, but is not limited to, a software or hardware component, such as a Field Programmable Gate Array (FPGA) or Application Specific Integrated Circuit (ASIC), which performs certain tasks. A unit may advantageously be configured to reside on the addressable storage medium and configured to execute on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and units may be combined into fewer components and units or further separated into additional components and units.

Hereinafter, exemplary embodiments of the present invention will be described in detail with reference to the attached drawings.

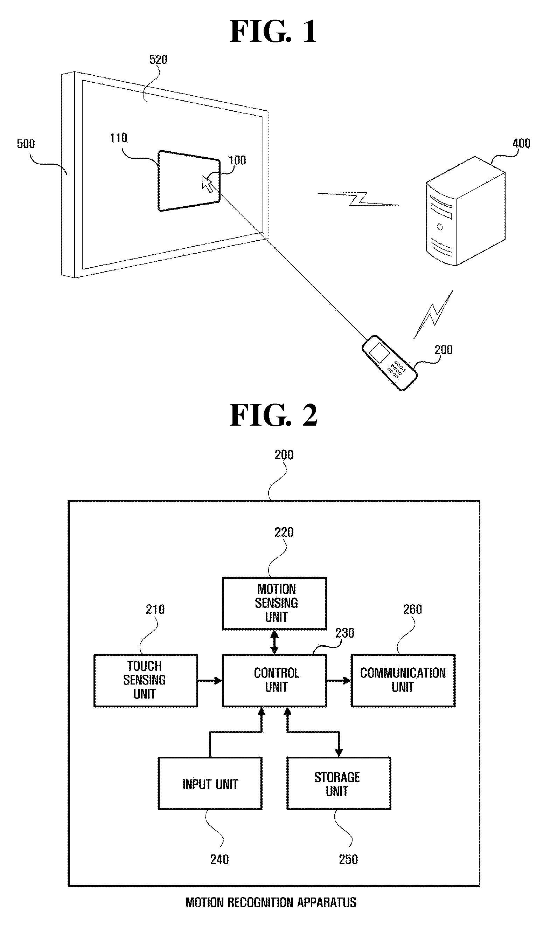

FIG. 1 is a diagram illustrating a motion recognition system according to an exemplary embodiment of the present invention. The motion recognition system includes a motion recognition apparatus 200, a pointer control apparatus 500, and a display apparatus 600.

The pointer control apparatus 500 generates a graphic object 110 and a pointer 110 and changes the coordinates of the pointer 100 in response to a control signal received from the motion recognition apparatus 200.

The pointer control apparatus 500 may be a personal computer embedded with a central processing unit (CPU). Accordingly, a user may control the motion of the pointer 100 using a mouse (not shown) connected to the pointer control apparatus 500 and control the motion of the graphic object 110 by performing a drag-and-drop operation using buttons provided on the mouse.

The user may point to a location on a display unit 620 of the display apparatus 600 by using the motion recognition apparatus 200. In this case, the motion recognition apparatus 200 transmits control signals for controlling the motion of the pointer 100 to the pointer control apparatus 500 by communicating with the pointer control apparatus 500 in a wired or wireless manner. That is, when the user inputs a motion to the motion recognition apparatus 200, a motion sensor included in the motion recognition apparatus 200 senses the motion, and a signal containing information about the sensed motion is transmitted to the pointer control apparatus 500. The information about the motion may be information about a sensed motion or the trajectory of the sensed motion.

When a control signal is transmitted to the pointer control apparatus 500 by using an input unit provided in the motion recognition apparatus 200, the pointer control apparatus 500 may generate a button down event of the mouse to drag-and-drop the graphic object 110.

FIG. 2 is a block diagram of a motion recognition apparatus 200 according to an exemplary embodiment of the present invention. The motion recognition apparatus 200 includes a touch sensing unit 210, a motion sensing unit 220, a control unit 230, an input unit 240, a storage unit 250, and a communication unit 260.

The touch sensing unit 210 includes one or more touch cells to sense a user's touch. The touch cells are discrete regions that sense a user's touch. The control unit 230 may determine whether a motion applied by a user is effective based on a combination of touch cells selected by the user.

The touch cells included in the touch sensing unit 210 sense a user's touch using at least one of electrical, magnetic, electromagnetic, pressure-sensing, instrumental, temperature-sensing, ultrasonic, moisture-sensing, microwave, optical, chemical, radioactive, and shape-sensing methods.

An electrical touch cell senses a user's touch by detecting the displacement of electric resistance or the flow of electric current. The electrical touch cell may include, for example, an ohm meter to sense a user's touch using the displacement of electric resistance caused by the touch or to sense the user's touch by detecting microcurrents flowing through the body of the user.

A magnetic touch cell includes a hall sensor. Thus, it can sense a user's touch based on a change in the magnitude or distribution of magnetism caused by the touch.

Examples of electromagnetic touch cells include capacitive touch cells. Thus, an electromagnetic touch cell may be made of both a conductive material and an insulating material such as rubber, plastic or glass. In addition, the touch sensing unit 210 may react to a change in capacitance as well as to the magnitude of the capacitance. Accordingly, a material hardly affected by external environmental factors such as temperature and humidity may be used to form the touch sensing unit 210.

A pressure-sensing touch cell includes a pressure sensor and senses a user's touch by comparing the pressure applied by the touch and a preset pressure.

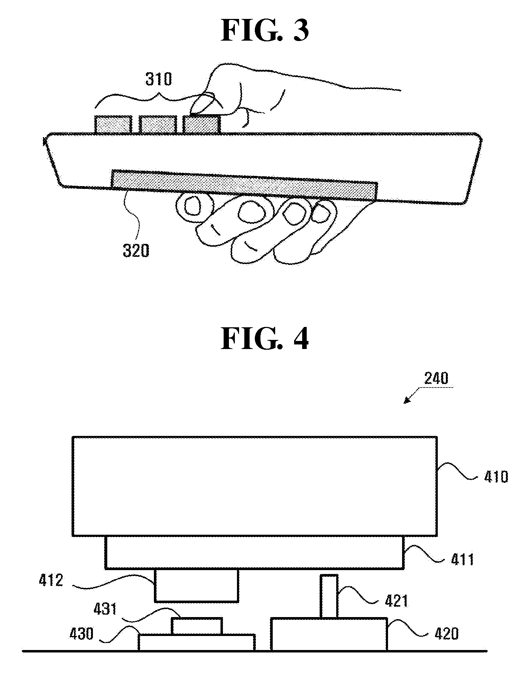

As a kind of pressure-sensing touch cell, instrumental touch cells may be included in the touch sensing unit 210. An instrumental touch cell senses a user's touch when an instrument moves according to the pressure applied by the user. Examples of the instrumental touch cell includes a touch cell which detects the presence of the applied pressure by a instrument moving to form an electrical circuit when pressure is applied to the instrument. Instrumental touch cell included in the input unit 240 each may include both a unit sensing a user's touch and a unit sensing the user's command, which will be described in detail later with reference to FIG. 4.

A temperature-sensing touch cell includes a temperature sensor and senses a user's touch based on a temperature change caused by the touch.

An ultrasonic touch cell includes a sound navigation and ranging (SONA) sensor and senses a user's touch using the reflection of an ultrasonic wave.

A moisture-sensing touch cell may sense a user's touch based on a change in moisture caused by the touch. The use of moisture-sensing touch cells can prevent a malfunction arising from a touch made by an object instead of a part of the human body.

A microwave touch cell may sense a user's touch using the reflection of a microwave.

An optical touch cell senses a user's touch by detecting the flow of light. Specifically, an optical touch cell continuously emits light such as infrared light. When a user touches the optical touch cell, the flow of the light is blocked, and the light is reflected. The optical touch cell senses the user's touch based on the reflected light. Alternatively, an optical touch cell may sense the user's touch based on the amount of received external light.

A chemical touch cell includes an oxygen sensor and senses a user's touch based on a change in the amount of oxygen caused by the touch. When a user touches an oxygen sensor, the amount of oxygen sensed by the oxygen sensor may be reduced. A chemical touch cell senses the touch by detecting the reduction in the amount of oxygen.

A radioactive touch cell includes a sensor sensing radiation, such as a neutron detection sensor. Thus, the radioactive touch cell senses a user's touch based on a change in the amount of sensed radiation caused by the touch.

A shape-sensing touch cell includes a tactile sensor to sense a user's touch. Since the tactile sensor can sense the shape of an object which applies pressure, the shape-sensing touch cell identifies the shape of an object which applies pressure and determines the object's touch to be a user's touch only when the identified shape of the object is that of a part of the human body.

One or more touch cells may be provided on at least one location of the input unit 240 which receives a user's command or the outer parts of a body of the motion recognition apparatus 200. When a touch cell is provided on an outer part of the body of the motion recognition apparatus 200, it may be closely attached to an outer or inner surface of the body housing of the motion recognition apparatus 200 or may be disposed on the inner surface with a small gap therebetween.

The motion sensing unit 220 senses a motion applied to the body of the motion recognition apparatus 200. In the present invention, the motion sensing unit 220 may be an inertial sensor. An inertial sensor displays the inertial force of a mass that is generated by acceleration or angular velocity as the deformation of an elastic structure connected to the mass, and displays the deformation of the elastic structure as electrical signals using an appropriate sensing method and an appropriate signal processing method, thereby sensing a motion applied to the body of the motion recognition apparatus 200. That is, in the present invention, the inertial sensor senses a motion input by a user based on at least one of acceleration and angular velocity generated by the input motion.

The motion sensing unit 220 according to the exemplary embodiment is not limited to an inertial sensor. Examples of the motion sensing unit 220 may include an infrared sensor, a vision sensor, an ultrasonic sensor, and a microwave sensor. An infrared sensor senses the distance from an object and the motion of the object based on ambient infrared changes. A vision sensor senses the motion of an object based on an input image, and an ultrasonic sensor, like a SONA sensor, senses the distance from an object and the motion of the object based on ultrasonic waves reflected by the object. A microwave sensor senses the distance from an object and the motion of the object based on microwaves reflected by the object.

The motion sensing unit 220 includes at least one of an inertial sensor, an infrared sensor, a vision sensor, an ultrasonic sensor, and a microwave sensor to sense the motion of an object. That is, the motion sensing unit 220 may be a single sensor or a combination of sensors.

The motion sensing unit 220 may sense a three-dimensional (3D) motion composed of a linear motion and a curvilinear motion, as well as a two-dimensional (2D) motion, such as a linear or curvilinear motion. That is, a user may combine a plurality of 2D or 3D basic motions to generate a desired motion.

When the motion sensing unit 220 according to the present invention is an inertial sensor, an acceleration sensor (not shown) included in the motion sensing unit 220 may sense the acceleration of gravity. Accordingly, the absolute coordinates of the motion recognition apparatus 200 for roll and pitch motions of the motion recognition apparatus 200 may be calculated based on the acceleration of gravity. On the other hand, since a yaw motion is a motion unrelated to the acceleration of gravity, the coordinates of the motion recognition apparatus 200 for the yaw motion may be determined based on the initial operation of the motion recognition apparatus 200. For example, the coordinates of the motion recognition apparatus 200 for the yaw motion may be determined based on coordinates at the time when power is supplied to the motion recognition apparatus 200 or coordinates at the time when a motion is applied to the motion recognition apparatus 200 after a lapse of a predetermined period of time from when no motion is applied to the motion recognition apparatus 200.

The input unit 240 receives user commands. That is, the input unit 240 includes buttons, a wheel, a jog shuttle, etc. by which a user can input commands. A user can manipulate the input unit 240 to input characters, numbers, etc. and to input control commands for special functions implemented by the pointer control apparatus 500 or the display apparatus 600.

As described above, the control unit 230 can determine whether a motion input by a user is effective based on a combination of touch cells selected by the user. In this case, the input unit 240 receives the combination of touch cells selected by the user.

A combination of touch cells input through the input unit 240 may be stored in the storage unit 250. The storage unit 250 is a module that can input and output information, such as a hard disk, a flash memory, a compact flash (CF) card, a secure digital (SD) card, a smart media (SM) card, a multimedia card (MMC), or a memory stick. The storage unit 250 may be included in the motion recognition apparatus 200 or in a separate apparatus. When the storage unit 250 is included in a separate apparatus, the communication unit 260 may communicate with the separate apparatus to transmit a combination of touch cells input through the input unit 240 to the separate apparatus or receive a combination of touch cells from a storage unit included in the separate apparatus.

The communication unit 260 transmits a signal for a motion sensed by the motion sensing unit 220 or a signal for a user command input through the input unit 240 to the pointer control apparatus 500 based on whether a user's touch has been sensed. The communication unit 260 may communicate with the pointer control apparatus 500 using a wired communication method, such as Ethernet, a universal serial bus (USB), Institute of Electrical and Electronics Engineers (IEEE) 1394, serial communication or parallel communication, or a wireless communication method such as infrared communication, Bluetooth, home radio frequency (RF), a wireless local area network (WLAN) or a mobile communication network.

The control unit 230 determines whether a motion applied by a user is effective based on the result of sensing the user's touch using the touch sensing unit 210. That is, the control unit 230 determines whether the motion applied by the user is intended by the user.

To determine whether the motion applied by the user is effective, the control unit 230 may check whether a touch cell of the input unit 240 has sensed the user's touch. Generally, when a user intends to move the pointer 100 being displayed on the display apparatus 600, the user also intends to input a command through the input unit 240. Here, the user may move the motion recognition apparatus 200 while placing a finger or a part of his or her body on a specific or arbitrary button among the buttons of the input unit 240, so that the control unit 230 can recognize the motion as an effective motion.

When the user unintentionally touches or picks up the motion recognition apparatus 200 placed on the floor, the user may move the motion recognition apparatus 200 regardless of his or her intention while touching the input unit 240. Thus, the control unit 230 may determine the effectiveness of a motion by checking whether a touch cell provided on the bottom of the motion recognition apparatus 200 has sensed the user's touch. That is, the control unit 230 checks a pose in which the user holds the motion recognition apparatus 200 to apply an effective motion to the motion recognition apparatus 200. If the user's touch is not sensed by the touch cell provided on the bottom of the motion recognition apparatus 200, even when the user applies a motion to the motion recognition apparatus 200 by touching the input unit 240, the control unit 230 does not recognize the applied motion as an effective user touch.

FIG. 3 is a diagram illustrating touch cells provided in the motion recognition apparatus 200 of FIG. 2. Referring to FIG. 3, touch cells 310 are arranged in buttons provided on a top surface of the body of the motion recognition apparatus 200, and a touch cell 320 is provided on a bottom surface of the body.

When the touch cells 310 and 320 are placed as shown in FIG. 3, a user may place a part of his or her hand on the bottom surface of the body of the motion recognition apparatus 200 and place another part of his or her hand on an arbitrary button, so that an effective combination of touch cells can be sensed. For example, the user may place part or all of his or her fingers (from an index finger to a little finger) on the bottom surface of the body of the motion recognition apparatus 200 and place a thumb on an arbitrary button. In this state, the user may apply a motion to the motion recognition apparatus 200, so that the control unit 230 can transmit a signal for the effective motion via the communication unit 260.

Referring back to FIG. 2, the control unit 230 may determine the effectiveness of a motion based on the sensing result of a preset combination of touch cells among one or more touch cells. That is, different users may hold the motion recognition apparatus 200 in different poses. Thus, a user may control the control unit 230 to recognize a touch sensed only by a combination of touch cells desired by the user among touch cells included in the motion recognition apparatus 200 as an effective user touch.

For example, when touch cells are provided on the input unit 240, both sides and bottom surface of the motion recognition apparatus 200, the user may control the control unit 230 to recognize a touch sensed only by the touch cells provided on the input unit 240 and the right side of the motion recognition apparatus 200 as an effective user touch or may control the control unit 230 to recognize a touch sensed only by the touch cells provided on the input unit 240 and the left side and bottom surface of the motion recognition apparatus 200 as an effective user touch.

The control unit 230 may limit the sensing of a motion or the transmission of a motion signal based on the sensing result of a preset combination of touch cells among one or more touch cells. For example, when picking up the motion recognition apparatus 200 placed on the floor, a user touches both sides of the motion recognition apparatus 200. In this case, if the user's touch is sensed by touch cells provided on both sides of the motion recognition apparatus 200, the control unit 230 stops the operation of the motion sensing unit 220 or prevents a signal for a motion sensed by the motion sensing unit 220 from being transmitted via the communication unit 260.

The control unit 230 controls the touch sensing unit 210, the motion sensing unit 220, the input unit 240, the storage unit 250, and the communication unit 260. In addition, the control unit 230 performs tasks such as sensor signal processing and data processing. That is, an analog signal processor (not shown) included in the control unit 230 amplifies a signal received from the motion sensing unit 220 and performs a filtering operation using a low pass filter (LPF) or a high pass filter (HPF) to extract only a specific band of a signal. A digital signal processor (not shown) included in the control unit 230 controls the drift or bias of the motion sensing unit 220 and performs a filtering operation using a digital LPF or a digital HPF.

Through data processing, the control unit 230 can change a scale for each axis in a 3D space or eliminate a motion displacement caused by handshakes, which is, however, outside the scope of the present invention and thus will not be described in detail.

While a case where the input unit 240 includes touch cells has been described above as an example, two mechanical sensing devices can also be included in the input unit 240 to sense a touch on the input unit 240 and a user command separately. Referring to FIG. 4, the input unit 240 includes a touch unit 410, a first pressing unit 411, a second pressing unit 412, a first pressing sensor 420, and a second pressing sensor 430.

The first pressing unit 411 and the second pressing unit 412 are provided under the touch unit 410 directly touched by a user. The second pressing unit 412 is disposed under the first pressing unit 411. That is, they are positioned at different heights.

The first pressing sensor 420 and the second pressing sensor 430 sense the pressure applied from the outside. To this end, the first pressing sensor 420 and the second pressing sensor 430 include a first protrusion 421 and a second protrusion 431, respectively. When pressure is applied to the first and second protrusions 421 and 431, the first and second protrusions 421 and 431 are inserted into the first pressing sensor 420 and the second pressing sensor 430, respectively. Accordingly, the first pressing sensor 420 and the second pressing sensor 430 can sense the applied pressure.

When pressure is applied to the touch unit 410, the first pressing unit 411 touches the first protrusion 421 of the first pressing sensor 420, and the second pressing unit 412 touches the second protrusion 431 of the second pressing sensor 430. Here, since a gap between the first pressing unit 411 and the first protrusion 421 is smaller than that between the second pressing unit 412 and the second protrusion 431, the first pressing sensor 420 senses the pressure before the second pressing sensor 430.

Accordingly, a user's touch on the input unit 240 and a user command can be sensed separately. That is, when the first pressing sensor 420 senses pressure, it is determined that the sensed pressure results from a user's touch. When the second pressing sensor 430 senses pressure, it is determined that the sensed pressure results from a user's command.

Ultimately, a touch cell of the input unit 240 can be understood as a combination of the first pressing unit 411 and the first pressing sensor 420.

While two pressing units 411 and 412 and two pressing sensors 420 and 430 are provided in the input unit 240 illustrated in FIG. 4, one pressing unit and two pressing sensors having protrusions at different heights can be provided. Also, one pressing unit and one pressing sensor that can sense two levels of pressure can be provided.

Until now, a case where the control unit 230 determines the effectiveness of an input motion based on a user's touch sensed by touch cells has been described. However, the control unit 230 according to an exemplary embodiment can also determine the effectiveness of an input motion based on the duration of time from when a user input is generated using the buttons of the input unit 240.

For example, the control unit 230 determines an input motion to be an effective motion during a preset period of time from the generation of a user input.

When a period of time set for a first input among user inputs generated using the buttons of the input unit 240 is a first duration and when a period of time set for a second input sensed after the first input is a second duration, if the second input is sensed within the first duration, the control unit 230 may determine a motion input during the second duration from the generation of the second input to be an effective motion.

The first duration and the second duration may be equal to or different from each other. Whether the first duration and the second duration overlap each other depends on a user's setting. The total duration according to a plurality of user inputs may vary according to whether the first duration and the second duration are equal and whether they overlap each other.

For example, the first duration may be set to 10 seconds, the second duration may be set to 12 seconds, and the first and second durations may be allowed to overlap each other. In this case, if a second input is generated at a 6^{th} second after the generation of a first input, the control unit 230 may terminate applying the first duration and start applying the second duration. Accordingly, the total duration during which an input motion is determined to be an effective motion is 18 seconds. That is, 4 seconds from the start of the second duration to the expected end of the first duration is a period of time by which the first and second durations overlap each other and is excluded from 22 seconds, i.e., the total duration of the first duration and the second duration.

In another example, the first duration may be set to 10 seconds, the second duration may be set to 12 seconds, and the first and second durations may not be allowed to overlap each other. In this case, if a second input is generated at a 6^{th} second after the generation of a first input, the control unit 230 may start applying the second duration after waiting until the time when the first duration ends, that is, until a 10^{th} second after the generation of the first input. Accordingly, the total duration during which an input motion is determined to an effective motion is 22 seconds. That is, the total duration is 22 seconds by adding the first duration of 10 seconds and the second duration of 12 seconds.

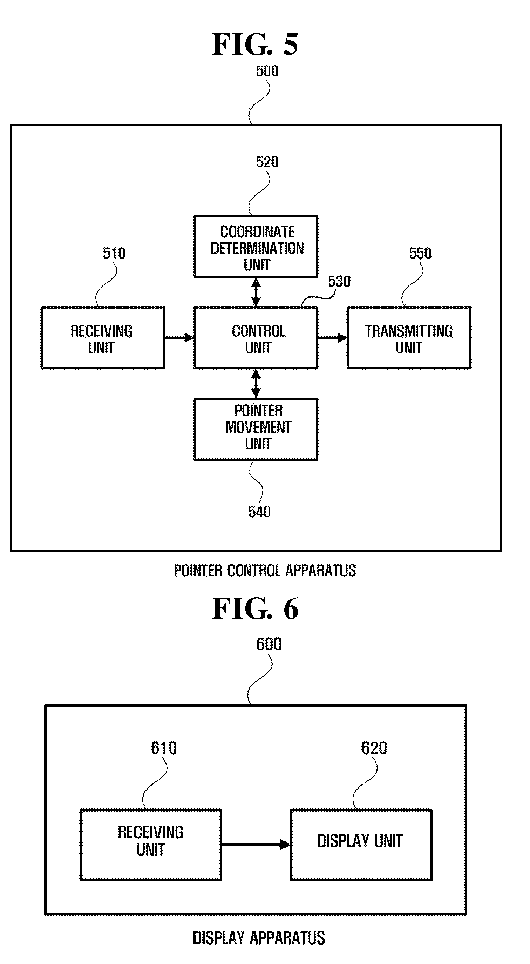

FIG. 5 is a block diagram of a pointer control apparatus 500 according to an exemplary embodiment of the present invention. Referring to FIG. 5, the pointer control apparatus 500 includes a receiving unit 510, a coordinate determination unit 520, a control unit 530, a pointer movement unit 540, and a transmitting unit 550.

The receiving unit 510 receives a signal for a motion or a signal for a user command from the motion recognition apparatus 200.

The received signal is transmitted to the control unit 530. When the received signal is a signal for a user command, the control unit 530 performs a task corresponding to the received signal. For example, the control unit 530 may turn the pointer control apparatus 500 on or off or may control the screen or sound of the pointer control apparatus 500.

When the received signal is a signal for a motion, the control unit 530 transmits the received signal to the coordinate determination unit 520. Accordingly, the coordinate determination unit 520 determines the coordinates of the pointer 100 displayed on a display region of the display apparatus 600.

That is, the coordinate determination unit 520 applies displacement corresponding to the received signal to the current position of the pointer 100 to calculate the absolute coordinates of the pointer 100.

When the pointer movement unit 540 moves the pointer 100 to the determined absolute coordinates, the pointer 100 is mapped to the display region according to the determined coordinates of the pointer 100, and an image signal for the displayed pointer 100 is transmitted to the display apparatus 600 through the transmitting unit 550.

Meanwhile, when the pointer control apparatus 500 includes a display unit (not shown), the pointer 100 may be displayed on the display region of the display unit of the pointer control apparatus 500 according to the coordinates of the pointer 100 determined by the coordinate determination unit 520.

FIG. 6 is a block diagram of a display apparatus 600 according to an exemplary embodiment of the present invention. Referring to FIG. 6, the display apparatus 600 includes a receiving unit 610 and a display unit 620.

The receiving unit 610 receives the image of the pointer 100 or the image of the graphic object 110 mapped onto the coordinates.

The received image is transmitted to the display unit 620, and the display unit 620 displays the image. The display unit 620 is a module having an image display device capable of displaying input image signals, such as a cathode ray tube (CRT), a liquid crystal display (LCD), a light-emitting diode (LED), an organic light-emitting diode (OLED), or a plasma display panel (PDP). The display unit 620 displays received image information.

In FIGS. 5 and 6, the pointer control apparatus 500 and the display apparatus 600 are separated from each other, but the invention is not limited thereto. The pointer control apparatus 500 and the display apparatus 600 may be integrated into one apparatus.

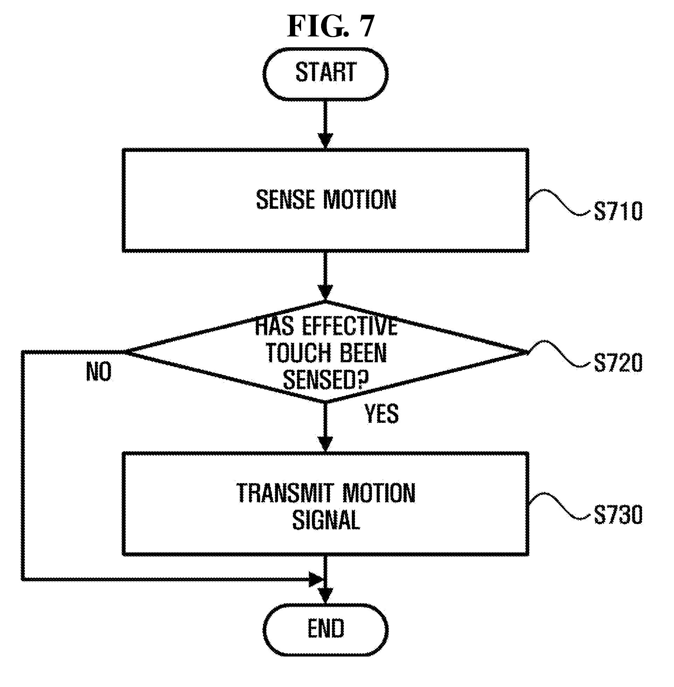

FIG. 7 is a flowchart illustrating a motion recognition process according to an exemplary embodiment of the present invention.

In order to recognize a motion, the motion sensing unit 220 of the motion recognition apparatus 200 senses a motion applied to the body of the motion recognition apparatus 200 (operation S710).

The motion sensed by the motion sensing unit 220 is transmitted to the control unit 230, and the control unit 230 checks whether the touch sensing unit 210 has sensed an effective user input (operation S720).

For example, the control unit 230 may check whether a touch cell or a pressing sensor of the input unit 240 has sensed a user's touch, whether a touch cell on the bottom of the body has sensed the user's touch, or whether a preset combination of touch cells among one or more touch cells of the input unit 240 have sensed the user's touch.

The control unit 230 may also check whether the input unit 240 has sensed an effective user input (operation S720). Here, the control unit 230 may determine a motion, which is sensed within a preset duration from the time when a user input is generated using the buttons of the input unit 240, to be effective.

When determining that a currently sensed user input is effective, the control unit 230 determines that the sensed motion is effective and transmits a signal for the sensed motion to the pointer control apparatus 500 via the communication unit 260 (operation S730).

When determining that the currently sensed user input is not effective, the control unit 230 determines that the sensed motion is not effective and discards the signal for the sensed motion.

In FIG. 7, sensing a motion using the motion sensing unit 220 is performed before sensing a user input (sensing a touch using the touch sensing unit 210 or sensing an input using the input unit 240). However, this is merely an example of the present invention. Sensing a user input can be performed before sensing a motion using the motion sensing unit 220.

When sensing a user input is performed before sensing a motion, the control unit 230 may control the operation of the motion sensing unit 220 or the communication unit 260 with reference to the result of sensing the user input.

For example, when determining that a currently sensed user input is effective, the control unit 230 may control the motion sensing unit 220 to sense an input motion or control the communication unit 260 to transmit a signal for a motion sensed by the motion sensing unit 220.

However, when determining that the currently sensed user input is not effective, the control unit 230 stops the operation of the motion sensing unit 220 or the communication unit 260.

While the present invention has been particularly shown and described with reference to exemplary embodiments thereof, it will be understood by those of ordinary skill in the art that various changes in form and detail may be made therein without departing from the spirit and scope of the present invention as defined by the following claims. The exemplary embodiments should be considered in a descriptive sense only and not for purposes of limitation.

## Claims

1. A motion recognition apparatus comprising:
a motion sensing unit sensing a motion applied to a body of the motion recognition apparatus;
a touch sensing unit comprising one or more touch cells to sense a user's touch;
a control unit determining whether the applied motion is effective based on the user's sensed touch; and
a communication unit transmitting a signal for the applied motion based on whether the applied motion is effective.

2. The apparatus of claim 1, wherein the motion sensing unit comprises at least one of an inertial sensor, an infrared sensor, a vision sensor, an ultrasonic sensor, and a microwave sensor to sense the motion applied to the body of the motion recognition apparatus.

3. The apparatus of claim 1, wherein the touch cells sense the user's touch using at least one of electrical, magnetic, electromagnetic, pressure-sensing, instrumental, temperature-sensing, ultrasonic, moisture-sensing, microwave, optical, chemical, radioactive, and shape-sensing methods.

4. The apparatus of claim 1, wherein the touch cells are provided on an input unit which receives the user's command and on at least one of outer parts of the body of the motion recognition apparatus.

5. The apparatus of claim 4, wherein when the user's touch is sensed by a touch cell provided on the input unit, the control unit determines that the applied motion is effective.

6. The apparatus of claim 4, wherein when the user's touch is sensed by a touch cell provided on the input unit and a touch cell provided on at least one of the outer parts of the body, the control unit determines that the applied motion is effective.

7. The apparatus of claim 1, wherein when the user's touch is sensed by a preset combination of touch cells among the touch cells, the control unit determines that the applied motion is effective.

8. The apparatus of claim 1, wherein when the user's touch is sensed by a preset combination of touch cells among the touch cells, the control unit determines that the applied motion is not effective.

9. A motion recognition apparatus comprising:
a motion sensing unit sensing a motion applied to a body of the motion recognition apparatus;
an input unit comprising one or more buttons to sense a user's input;
a control unit determining whether the applied motion is effective based on a duration from the generation of the sensed input; and
a communication unit transmitting a signal for the applied motion based on whether the applied motion is effective.

10. The apparatus of claim 9, wherein the motion sensing unit comprises at least one of an inertial sensor, an infrared sensor, a vision sensor, an ultrasonic sensor, and a microwave sensor to sense the motion applied to the body of the motion recognition apparatus.

11. The apparatus of claim 9, wherein the control unit determines the applied motion to be effective (when the motion is applied?) during a first duration from the generation of a first input among sensed inputs.

12. The apparatus of claim 11, wherein when a second input generated after the first input is sensed within the first duration, the control unit determines the applied motion to be effective (when the motion is applied?) during a second duration from the generation of the second input.

13. The apparatus of claim 12, wherein the first duration and the second duration are equal to or different from each other.

14. A motion recognition method comprising:
sensing a motion applied to a body of a motion recognition apparatus;
sensing a user's touch using one or more touch cells;
determining whether the applied motion is effective based on the user's sensed touch; and
transmitting a signal for the applied motion based on whether the applied motion is effective.

15. The method of claim 14, wherein the sensing of the motion applied to the body comprises sensing the motion applied to the body of the motion recognition apparatus using at least one of an inertial sensor, an infrared sensor, a vision sensor, an ultrasonic sensor, and a microwave sensor.

16. The method of claim 14, wherein the touch cells sense the user's touch using at least one of electrical, magnetic, electromagnetic, pressure-sensing, instrumental, temperature-sensing, ultrasonic, moisture-sensing, microwave, optical, chemical, radioactive, and shape-sensing methods.

17. The method of claim 14, wherein the touch cells are provided on an input unit which receives the user's command and on at least one of outer parts of the body of the motion recognition apparatus.

18. The method of claim 17, wherein the determining of whether the applied motion is effective comprises determining that the applied motion is effective when the user's touch is sensed by a touch cell provided on the input unit.

19. The method of claim 17, wherein the determining of whether the applied motion is effective comprises determining that the applied motion is effective when the user's touch is sensed by a touch cell provided on the input unit and a touch cell provided on at least one of the outer parts of the body.

20. The method of claim 14, wherein the determining of whether the applied motion is effective comprises determining that the applied motion is effective when the user's touch is sensed by a preset combination of touch cells among the touch cells.

21. The method of claim 14, wherein the determining of whether the applied motion is effective comprises determining that the applied motion is not effective when the user's touch is sensed by a preset combination of touch cells among the touch cells.

22. A motion recognition method comprising:
sensing a motion applied to a body of a motion recognition apparatus;
sensing a user's input using one or more buttons;
determining whether the applied motion is effective based on a duration from the generation of the sensed input; and
transmitting a signal for the applied motion based on whether the applied motion is effective.

23. The method of claim 22, wherein the sensing of the motion applied to the body comprises sensing the motion applied to the body of the motion recognition apparatus using at least one of an inertial sensor, an infrared sensor, a vision sensor, an ultrasonic sensor, and a microwave sensor.

24. The method of claim 22, wherein the determining of whether the applied motion is effective comprises determining the applied motion to be effective (when the motion is applied?) during a first duration from the generation of a first input among sensed inputs.

25. The method of claim 24, wherein the determining of whether the applied motion is effective comprises, if a second input generated after the first input is sensed within the first duration, determining the applied motion to be effective (when the motion is applied?) during a second duration from the generation of the second input.

26. The method of claim 25, wherein the first duration and the second duration are equal to or different from each other.
